# EUROPEAN PATENT APPLICATION

(11) **EP 4 786 925 A1**
(43) Date of publication of application: **05.08.2026**
(21) Application number: 25155088.5
(22) Date of filing: 30.01.2025
(51) Int. Cl.: G01C 21/36

(54) **A METHOD FOR DISPLAYING A REMAINING DRIVING RANGE FOR A DRIVER OF A MOTOR VEHICLE BY A SUPPORT SYSTEM OF THE MOTOR VEHICLE, A CORRESPONDING COMPUTER PROGRAM PRODUCT, AND A CORRESPONDING SUPPORT SYSTEM**

(71) Applicant: VOLKSWAGEN AG, 38440 Wolfsburg (DE); Scania CV AB, 151 87 Södertälje (SE)
(72) Inventor: Mrusek, Falk, 38530 Didderse (DE); Heissner, Patrick, 38473 Tiddische (DE)
(74) Representative: Hofstetter, Schurack & Partner

(57) **Abstract**

The present invention relates to a method for displaying a remaining driving range (4, 5) for a driver (3) of a motor vehicle (1) by a support system (2) of the motor vehicle (1), comprising the steps of: determining a remaining driving time of the driver (3) depending on a tachograph (8) by an electronic computing device (7) of the support system (2); determining the remaining driving range (4, 5) depending on the determined driving time and depending on a current navigation information of a navigation device (9) by the electronic computing device (7); and displaying the determined driving range (4, 5) on a display device (6) of the support system (2). Furthermore, the present invention relates to a computer program product as well as to a support system.

## Description

The present invention relates to a method for displaying a remaining driving range for a driver of a motor vehicle by a support system of the motor vehicle. Furthermore, the present invention relates to a corresponding computer program product, as well as to a corresponding support system.

The statutory regulations for driving and rest times of, for example, truck drivers are intended to ensure road safety by reducing driver fatigue. These regulations are, for example, laid down in the European Union by Regulation No. 561/2006 and implemented by the member states.

The most important provisions of the regulation stipulate that truck drivers may have a maximum daily driving time of nine hours, which can be extended to ten hours once per week. Every 24-hour period, the driver must take at least 11 consecutive hours of rest or two consecutive rest periods totaling 12 hours, with the second rest period being in a provided reclining space or sleeping cabin in the vehicle. In addition, truck drivers must take a weekly rest period of at least 45 hours, which can be taken either uninterruptedly or in two consecutive periods of 24 hours each and 15 hours. The daily and weekly rest periods may not be combined on the same day as the weekly rest period.

Compliance with these regulations is monitored by using a digital control device, which records and stores the driver's driving and resting times. These recordings must be available for at least 28 days and can be viewed by police or other competent authorities during checks.

These driving and resting times contribute to reducing driver fatigue in trucks and thus increasing road safety. Studies have shown that fatigue is a major factor in traffic accidents, particularly on long-haul journeys. Adhering to statutory regulations for driving and rest times can help reduce fatigue and thus lower the risk of serious accidents. Furthermore, these regulations also promote a healthy work-life balance for truck drivers and contribute to maintaining their physical and mental well-being. By adhering to the prescribed rest periods, drivers can sleep better, rest and gather new energy for the next leg of their journey, which in turn improves their performance and concentration.

From the state of the art, so-called tachographs and indicators are particularly known, which are primarily text messages on the truck cockpit display. There are also acoustic alerts when driving times are exceeded.

A drawback of the current state of the art is that, in particular, no visual display for the driver is known which would make it easier for the driver to reliably plan and view the corresponding driving and rest times. Furthermore, there is no permanent display of the temporal course and the planned future time corridors for driving, break and rest times. There is also no correlation between required stops due to driving times.

There is thus a need in the current state of the art to implement a corresponding display for driving and break times for the driver as comfortably as possible.

DE 10 2019 005 062 A1 relates to a method for guiding a motor vehicle preferable electrically or hydrogen-powered, particularly preferable a commercial vehicle. The method has a determination of at least one route guide in suggestion from a starting point to a destination point based on a temporal pause control, a current range and energy supply facilities between the starting point and the destination point. The method has an output of at least one route guidance suggestion. The method can be advantageous with regard to commercial vehicle-needs.

DE 10 2019 212 941 A1 discloses a method for controlling a state of charge of a battery of a motor vehicle, the motor vehicle having a drive motor and the one-board electrical system with battery which can be charged by means of the drive motor, a desired value for a future point in time being determined for the state of charge, taken into account at least one first boundary condition, wherein the state of charge of the battery enables a predetermined operation of the motor vehicle when the drive motor is switched off, and the state of charge of the battery is controlled, taking into account at least one second boundary condition, in such a way that this set point value is reached at the future point in time, so that predictive energy management is carried out in the vehicle electrical system of the motor vehicle.

Therefore, it is an object of the present invention to provide a method, a corresponding computer program product, as well as a corresponding support system, by which a driver of a motor vehicle may plan a pause/rest time of the driver in an improved manner.

This object is solved by a method, a corresponding computer program product, as well as a corresponding support system according to the independent claims. Advantageous embodiments are presented in the dependent claims.

One aspect of the invention relates to a method for displaying a remaining driving range for a driver of a motor vehicle by a support system of the motor vehicle. A remaining driving time of the driver depending on a tachograph of the support system is determined by an electronic computing device of the support system. The remaining driving range is determined depending on the determined driving time and depending on a current navigation information of a navigation device of the support system by the electronic computing device. The determined driving range is displayed on a display device of the support system.

Therefore, the driver of the motor vehicle can see the remaining driving time on the display device, in particular in relation to a driving range/a navigation map.

Furthermore, the method offers several technical advantages, in particular with improved accuracy. By utilizing data from the tachograph in a navigation device, which is in particular providing real-time traffic information and route details, this method offers a more accurate estimate of the remaining driving range. The remaining driving range is not a static value by dynamically calculated based on factors like current speed, driving time, traffic conditions, and even weather changes. This results in a more realistic prediction compared to estimations based solely on a view level or average consumption.

In particular, with a professional driver, for example when the motor vehicle is a truck, an optimized route plan can be provided. The support system may intelligently integrate suggested rest stops into a navigation route based on driver's fatigue regulations, in particular hours of service regulations. This insures drivers comply with the legal limits while minimizing overall travel time. Combined with remaining driving range calculation, the system may suggest fuel stops at optimal location along the route, considering both, distance and potential delays due the traffic or rest breaks. By factoring in work/rest/pause periods from the tachograph, the support system may provide a more accurate picture of a driver fatigual levels, prompting time in rest breaks and preventing driving when excessively tired. Knowing that the support system proactively plans for required pauses and refuel stops significantly reduces stress on drivers, allowing them to focus at safe and efficient driving. Companies may leverage this support system to optimize driver schedules and dispatching strategies, knowing the routes are planned with realistic work/rest/pause cycles in mind. By minimizing delays due to unplanned fuel stops or rest breaks, the support system contributes to smoother operations and reduced down time for fleets. The system may collect data on driver behavior, route efficiency, and fuel consumption patterns. This data can be used to identify areas for improvement in training strategies, fleet management, and overall operational strategies.

Therefore, expanding the currently available visualization of the for example remaining electric range, for example the form of a cloud, is provided by including the same display of the calculated range until the end of the driving time.

This allows the driver to see how far he can still drive electrically, but also how far he is still allowed to drive due to driving time/loss.

It is obvious for a person skilled in the art, that a display device of a navigation device can be used in order to display the remaining driving range depending on the tachograph. Furthermore, it is possible, that a separate display device can be used, in particular separate to the navigation device, in order to provide the driving range information depending on the remaining driving time.

In particular, the remaining driving time is depending on local laws. For example, a driver need to have rest times and pauses. According to this information, which can be received from the tachograph, the remaining driving time can be displayed.

The driving time in a truck refers specifically to the duration during which a truck driver actively controls the vehicle. This time is legally regulated to minimize fatigue and associated safety risks. Truck break time includes both planned breaks and rest periods. A break is an interruption of driving time during which the driver rests and does not have to be at the wheel. The minimum duration of these breaks depends on local regulations, usually at least 45 minutes after 4.5 hours of uninterrupted driving time. Rest time is a longer break from driving time during which the driver not only pauses but can devote themselves to restful sleep or leisure activities. The minimum duration of rest time also varies depending on regional regulations, but in many countries it is between 10-12 hours per 24-hour period. In some cases, multiple shorter rest periods may be allowed instead of a single long rest period, provided certain conditions are met.

The driver has the possibility to plan the duration and time of the required stop better and thus align it with refueling or loading operations, for example. When the driver is not "behind the wheel," the duration of the break can be displayed corresponding to the legally prescribed break or rest time. The display occurs specifically permanently in the so-called field of vision of the driver, but can also be visible from outside to authorities. This means no additional operation by the driver or authorities is required to display the driving/break times.

Better planning of driving and break times can increase productivity by reducing unnecessary waiting times and optimizing travel times. A display helps the driver use their time more efficiently and increase their workload. Adhering to driving and rest times improves road safety by reducing driver fatigue. A display helps the driver conserve energy and ensure they are sufficiently rested to drive safely.

In particular, it is also possible, that individual factors can be learned by the electronic computing device. For example, an average speed of the motor vehicle can be adapted depending on the driver behaviors. Depending on this average speed the remaining driving range can be adapted during operation and therefore, the remaining driving range can be determined in an improved and more accurate manner.

According to an embodiment, the determined driving range is displayed as a range cloud on the display device. This has the advantage, that instead of single inducing number, drivers may see a visual representation of their range. This can make it easier to grasp the potential variability and uncertainty in fuel estimations. The shape and size of the cloud could dynamically change based on real-time factors like traffic conditions, driving style, and terrain. This provides a constantly updated picture of the driver situation. A range cloud might be perceived as less stressful than a fixed number because it acknowledges the inherent fluctuations in fuel consumption range.

This has the advantage that the driver now have a clear understanding of the remaining range based on both, traditional fuel reserves, in particular if applicable, and for example the charge level of the battery of the electronic vehicle. This provides a holistic view of how far they can travel. Knowing the range based on both, fuel and battery allows drivers to plan refueling/recharging stops more effectively. They can chose the most suitable option depending on the vehicle type and remaining capacity. This may also generate a piece of mind for the drivers, as EV drivers of the face range anxiety. Displaying both types of range information helps alleviate this by showing a combined range that factors in battery capacity. Drivers may use this information to select routes that optimize charging stops or fuel stations based on their current energy levels and predicted needs. Drivers can make more informed decisions about driving habits, for example speed and acceleration, to maximize their range based on both, fuel and battery status.

In another embodiment, at least one point of interest inside the remaining driving range is displayed on the display device. Therefore, drivers may get information with potential destinations or useful stops along the route without having to actively search for them. This encourages planning and reduces decision fatigue, especially during long trips. Examples of point of interests could include gas stations, charging points, particular for electric vehicles, restaurants, hotels, rest areas, or even specific attractions based on the drivers preferences. The support system becomes more proactive and helpful by suggesting relevant destinations rather than just providing a numerical range. This makes the experience more engaging and user-friendly. Seeing a point of interest within range can remind drivers of potential stops they may otherwise overlook, promoting better planning and avoiding unexpected situations. The support system could learn from the drivers pass behavior and preferences to suggest more tailored point of interests. For example, if the driver visits coffee shops along their routes, the system could proactively display nearby options within the range.

In another embodiment, at least one loading station for loading an electrical energy storage device as the at least one point of interest is displayed on the display device. One of the biggest concerns of drivers of an electrical vehicle is running out of charge before reaching the destination. By proactively displaying charging stations within the remaining driving range, the system may help alleviate this anxiety and provides piece of mind. The drivers can easily identify charging locations along their route without having to search for them manually. This makes it simpler to plan refueling stops and reduces the likelihood of encountering unexpected delays. By making charging stations more visible, the system encourages the driver to utilize these facilities and contribute to a more sustainable transportation eco system. Furthermore, the display could even provide information on the availability and status of charging stations, for example occupied/available, and the charging speed. This allows for more informed decision-making regarding charging stop. The support system may potentially suggest routes that incorporate convenient charging stops based on the driver's desired destination and vehicles remaining charge.

In another embodiment, the at least one point of interest is displayed depending on a potential break duration. Instead of just join random points of interest, the support system suggests stops that align with a drivers planned break time. This encourages drivers to take meaningful breaks rather than just stopping randomly. The driver can quickly identify suitable options for the desired break length, weather it is a quick coffee stop, a longer lunch break, or even an overnight stay. Taking regular breaks is crucial for driver safety and alertness. This feature helps drivers planned for necessary rest stops, promoting better driving habits and reducing fatigue. For example, a driver needing a 30-minute break might see nearby coffee shops or fast-food restaurants displayed as the point of interest. For a longer break, for example one to two hours, the support system could suggest restaurants, parks, or shopping centers within range. By factoring into the route, the support system becomes a more helpful and proactive tool for drivers, promoting both, efficiency and well-being on the road.

In another embodiment, potential a border crossing along a route of the motor vehicle is taken into consideration by determining the remaining driving time. Border crossings often involve delays due to inspections, paperwork, and cues. Ignoring these factors can lead to inaccurate estimates and potentially missed connections or appointments. By factoring in potential border way times, drivers can adjust their schedules accordingly and arrive at their destinations on time. This reduces the stress and allows for a smoother travel experiences. Some countries has specific regulations regarding vehicle inspections or documentation requirements at borders. The system could remind drivers of these requirements based on the planned route, insuring they are prepared and compliant with local laws. Furthermore, the system may allow professional drivers to input their individual required rest period based on local regulations. The support system should then factor in these specific rest times when calculating remaining driving time and suggestion suitable break locations. In particular, it is obvious, that the required rest periods can also be received by a central server or can be stored inside a storage device of the electronic computing device.

In another embodiment, the remaining driving time is determined depending on an identification of the driver. For example, a camera or a fingerprint sensor inside/outside of the motor vehicle can be used to identify the driver. Furthermore, identification cards can be used in order to identify the driver. Therefore, if for example more drivers drive the motor vehicle, then the individual rest times can be used in order to determine the remaining driving time of each of the driver. For example, a driver, which has to rest, may change the seats with a person inside of the motor vehicle, which becomes the new driver. Then, for example, the old driver may rest inside the motor vehicle and the motor vehicle can be moved by the further driver without infringing the law regulations. Therefore, when the driver change automatically the current remaining driving range can be updated.

In particular, the present invention is a computer-implemented method. Therefore, another aspect of the invention relates to a computer program product comprising program code means for performing a method according to the preceding aspect.

A still further aspect of the invention relates to a computer-readable storage medium comprising at least the computer program product according to the preceding aspect.

Another aspect of the invention relates to a support system for displaying a remaining driving range for a driver of a motor vehicle, comprising at least one display device, and one electronic computing device, where the support system is configured for performing a method according to the preceding aspect. In particular, the method is performed by the support system.

Furthermore, the present invention relates to a motor vehicle comprising the support system according to the preceding aspect. For example, the motor vehicle may be configured as truck.

Advantageous embodiments of the method are to be regarded as advantageous embodiments of the computer program product, the support system, as well as the motor vehicle. The support system as well as the motor vehicle therefore comprises means for performing the method.

For application cases or application situations that may arise in the method and which are not explicitly described here, it can be provided that a fault message and/or a request for user feedback is issued and/or a standard setting and/or a predetermined initial state is set according to the method.

In this disclosure, a computing unit/electronic computing unit can be understood as a data processing device with processing circuits. A computing unit can thus perform calculations to process data. The calculations can also include indexed accesses to a data structure, for example, a lookup table (LUT),

A computing unit can in particular comprise one or more computers, one or more microcontrollers and/or one or more integrated circuits, for example, one or more application-specific integrated circuits (ASICs), one or more field-programmable gate arrays (FPGAs) and/or one or more system-on-a-chip (SoCs). The computing unit can also include one or more processors, for example, one or more microprocessors, one or more central processing units (CPUs), one or more graphics processing units (GPUs) and/or one or more signal processors, in particular one or more digital signal processors (DSPs). The computing unit can also comprise a physical or virtual cluster of computers or other of the aforementioned units.

A computing unit can also include one or more hardware and/or software interfaces and/or one or more storage units. A storage unit can be implemented as volatile memory, for example, as dynamic random access memory (DRAM) or static random access memory (SRAM), or as non-volatile memory, for example, as read-only memory (ROM), programmable read-only memory (PROM), erasable programmable read-only memory (EPROM), electrically erasable programmable read-only memory (EEPROM), flash memory or flash-EEPROM, ferroelectric random access memory (FRAM), magnetoresistive random access memory (MRAM), or phase-change random access memory (PCRAM).

In the following, an exemplary implementation of the invention is described. The figures show:
Fig. 1 a schematic side view according to an embodiment of a motor vehicle comprising an embodiment of a support system; and
Fig. 2 a schematic perspective view on a display device showing a remaining driving range according to an embodiment of the method.

The embodiments explained in the following is a preferred embodiment of the invention. However, in the embodiment, the described components of the embodiment each represent individual features of the invention which are to be considered independently of each other and which each develop the invention also independently of each other and thereby are also to be regarded as a component of the invention in individual manner or in another than the shown combination. Furthermore, the described embodiment can also be supplemented by further features of the invention already described.

In the figures, the same elements are comprising the same reference signs.

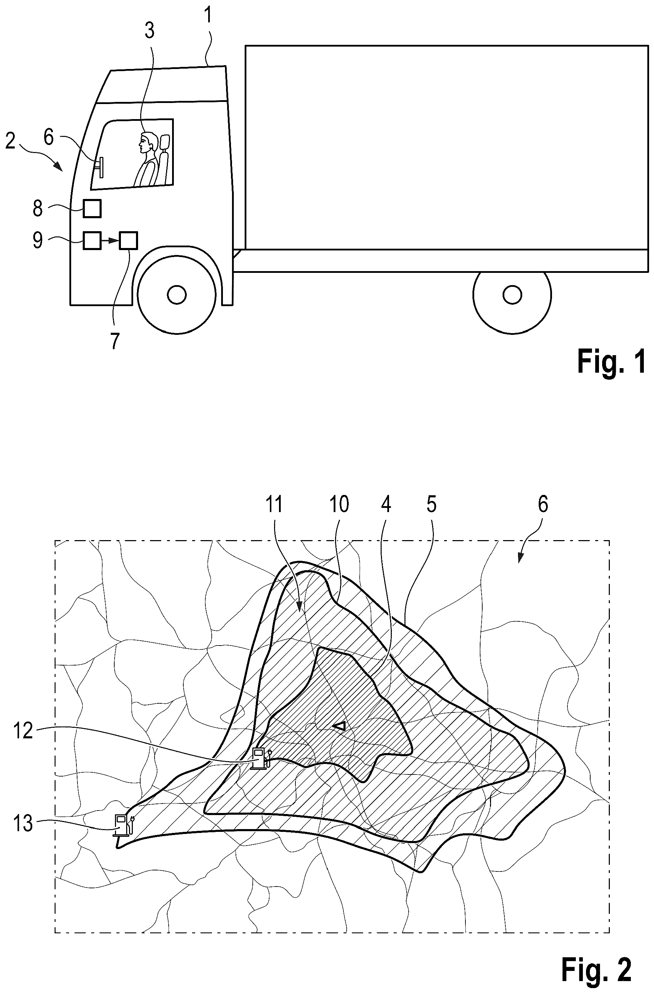

Fig. 1 shows a schematic side view according to an embodiment of a motor vehicle 1 comprising an embodiment of a support system 2. Inside the motor vehicle 1 a driver 3 is shown. In particular, the motor vehicle 1 is a truck and the driver 3 is a professional driver. The driver 3 has to comply rest and pause times.

The support system 2 is configured for displaying a remaining driving range 4, 5 (Fig. 2) for the driver 3 of the motor vehicle 1. Therefore, the support system 2 comprises at least one display device 6, and one electronic computing device 7.

According to an embodiment for a method for displaying the remaining driving range 4, 5 a remaining driving time of the driver 3 depending on a tachograph 8 of the support system 2 is determined by the electronic computing device 7. The remaining driving range 4, 5 is determined depending on the determined driving time and depending on a current navigation information of a navigation device 9. It is obvious for a person skilled in the art, that the tachograph 8, as well as the navigation device 9, may be a part of the support system 2 or may be separated arranged inside the motor vehicle 1.

The determined driving range 4, 5 is displayed on the display device 6.

Fig. 2 shows a schematic perspective view on the display device 6. In particular, a first remaining driving range 4 and a second remaining driving range 5 is shown. Furthermore, a further driving range 10 is shown, wherein the further driving range 10 is depending on a fill status of an energy storage device of the motor vehicle 1.

In particular, Fig. 2 shows, that the determined driving range 4, 5 is displayed as a range cloud 11 on the display device 6. Furthermore, additionally, as already shown, a remaining driving range (further driving range 10) depending on a fill status of the energy storage device of the motor vehicle 1 is displayed.

Furthermore, at least one point of interest 12, 13 inside the remaining driving range 4, 5 is displayed on the display device 6. In particular, at least one loading station for loading an electrical energy storage device as the at least one point of interest 12, 13 is displayed on the display device 6. Furthermore, the at least one point of interest 12, 13 is displayed depending on a potential break duration.

Furthermore, a potential border crossing along a route of the motor vehicle 1 can be taken into consideration by determining the remaining driving time.

In particular, the remaining driving time may be determined depending on an identification of the driver 3.

Therefore, the aim of the present invention is to enhance the current visualization of for example an electric range, in particular in the form of a cloud, as shown with the further remaining driving range 10, by adding a similar display for the calculated range until the end of the driving period. This allows the driver 3 to see how far the driver 3 can drive for example electrically and how far the driver 3 is legally allowed to drive based on driving times and regulations.

Regarding driving times, the electronic control unit 7 may receive the current legal regulations, in particular per country, stored as a basis for this algorithm. This enables the driver 3 to see their short (15 minutes), medium (30 minutes), or long (45 minutes) breaks displayed. This information may further help the driver to choose the most suitable charging station with powers ranging from 150 Kilowatt to 2.000 Kilowatt.

These algorithms may also consider border crossings as input to a count for potentially different regulations during route planning. For example, if a driver is allowed for a longer break, the driver 3 might not need to target a potentially occupied 1000-Kilowatt station.

Naturally, an exchange between the drivers card, for example for driving times per driver, and the vehicle architecture is required. As soon, as the driver 3 changes, the distances until reaching the end of the driving period can be recalculated.

A visualization remaining the electric range and the calculated distance until the end of the driving period as the at least two separate display clouds on one map is therefore provided. Depending on the law and break arrangements, more driving time clouds can be displayed, because, for example, in Germany, a 45-minute break can also be divided into 15 minutes and 30 minutes according to regulations.

In an embodiment, the method/the support system 2 does not use the integrated navigation system as a display, but rather an accessory that is subsequently coupled. Furthermore, instead of a for example semi-transparent cloud visualization, the method may propose using a dash line or similar visual representations. In particular, previously, when discussing range, the focus was on electric mobility. However, the method may also certainly be rolled out to all types of drive systems.

By leveraging the current navigation display, as it already provides all the basics, this roads, point of interests 12, 13, charging stations, and traffic updates may be used. The calculation and display of electric range serve as a template for visualizing the distance until the end of the driving period.

As an exemplary embodiment after a driving of 4.5 hours, a break of at least 45 minutes must be taken. The daily driving time is generally limited to more than 9 hours. Therefore, a truck drivers workday could look like this: Option A: 4.5 hours of driving time + 45 minutes break + 4.5 hours of driving time. Option B: Truck drivers also have the option to split their breaks, in this case, the first break for example must be at least 15 minutes and the second must be at least 30 minutes. The order cannot be reversed. As an example of such a division, two hours of driving time, 15 minutes break, 2.5 hours driving time, 30 minutes break and 4.5 hours driving time.

The first driving range 4 may show the example of option B and the second driving range 5 may show the example of option A.

Furthermore, the first point of interest 12 may be a loading station with higher than 800 Kilowatt and the second point of interest 13 may be a loading station with less than 350 Kilowatt.

### REFERENCE SIGNS

- 1: motor vehicle
- 2: support system
- 3: driver
- 4: first remaining driving range
- 5: second remaining driving range
- 6: display device
- 7: electronic computing device
- 8: tachograph
- 9: navigation device
- 10: further remaining driving range
- 11: range cloud
- 12: first point of interest
- 13: second point of interest

## Claims

1. A method for displaying a remaining driving range (4, 5) for a driver (3) of a motor vehicle (1) by a support system (2) of the motor vehicle (1), comprising the steps of:
- determining a remaining driving time of the driver (3) depending on a tachograph (8) by an electronic computing device (7) of the support system (2);
- determining the remaining driving range (4, 5) depending on the determined driving time and depending on a current navigation information of a navigation device (9) by the electronic computing device (7); and
- displaying the determined driving range (4, 5) on a display device (6) of the support system (2).

2. The method according to claim 1, wherein
the determined driving range (4, 5) is displayed as a range cloud (11) on the display device (6).

3. The method according to any of the preceding claims, wherein additionally a remaining driving range (10) depending on a fill status of an energy storage device of the motor vehicle (1) is displayed.

4. The method according to any of the preceding claims, wherein
at least one point of interest (12, 13) inside the remaining driving range (4, 5) is displayed on the display device (6).

5. The method according to claim 4, wherein
at least one loading station for loading an electrical energy storage device as the at least one point of interest (12, 13) is displayed on the display device (6).

6. The method according to claim 4 or 5, wherein
the at least one point of interest (12, 13) is displayed depending on a potential break duration.

7. The method according to any of the preceding claims, wherein
at least one potential border crossing along a route of the motor vehicle (1) is taken into consideration by determining the remaining driving time.

8. The method according to any of the preceding claims, wherein
the remaining driving time is determined depending on an identification of the driver (3).

9. A computer program product comprising program code means for performing a method according to any one of claims 1 to 8.

10. A support system (2) for displaying a remaining driving range (4, 5) for a driver (3) of a motor vehicle (1), comprising at least one display device (6), and one electronic computing device (7), wherein the support system (2) is configured for performing a method according to any one of claims 1 to 8.
